# EUROPEAN PATENT APPLICATION

(11) **EP 2 989 888 A1**
(43) Date of publication of application: **02.03.2016**
(21) Application number: 14788316.9
(22) Date of filing: 20.03.2014
(51) Int. Cl.: A01G 31/00

(54) **DEVICE AND METHOD FOR HYDROPONICS**

(30) Priority: 25.04.2013 JP 2013092279
(71) Applicant: Panasonic Intellectual Property Management Co., Ltd., Osaka-shi, Osaka 540-6207 (JP)
(72) Inventor: KATO, Sayaka, Osaka-shi, Osaka 540-6207 (JP); YANO, Hiroshi, Osaka-shi, Osaka 540-6207 (JP); SAKAI, Ayumi, Osaka-shi, Osaka 540-6207 (JP)
(74) Representative: Müller-Boré & Partner Patentanwälte PartG mbB
(86) International application number: PCT/JP2014/001630
(87) International publication number: WO 2014/174758

(57) **Abstract**

A hydroponic apparatus configured to grow a plant (100) having a taproot (102) and a branch root (103) includes: a plant support body (2) configured to support the plant 100; a taproot irrigation part (3) configured to spray a liquid in a form of mist onto the taproot (102) ; a deep-flow nutrient solution (10) in which the branch root (103) is soaked; and a liquid fertilizer concentration management sensor (5) configure to detect a concentration of the deep-flow nutrient solution (10). Referring to the detected concentration, the hydroponic apparatus controls at least one a concentration of the liquid sprayed from the taproot irrigation part (3) and the concentration of the deep-flow nutrient solution (10).

## Description

### [Technical Field]

The present invention relates to a hydroponic apparatus for, and a hydroponic method of, growing plants by hydroponics.

### [Background Art]

Patent Literature 1 given below has been known for a technique related to hydroponics. Patent Literature 1 describes a nutrient solution culture system for, and a nutrient solution culture method of, enlarging the roots of root crops using mist culture and deep flow culture.

Meanwhile, there is likelihood that in the above-mentioned nutrient solution culture system and nutrient solution culture method, the liquid fertilizer for the mist culture and the liquid fertilizer for the deep flow culture interfere with each other.

The present invention has been made with the foregoing situation taken into consideration. An object of the present invention is to provide a hydroponic apparatus and a hydroponic method which are capable of inhibiting the interference between the liquid fertilizer(s) for the mist culture and the liquid fertilizer for the deep flow culture.

### [Citation List]

### [Patent Literature]

[PTL 1] Japanese Patent Application Publication No. 2012-100573

### [Summary of Invention]

A hydroponic apparatus according to a first aspect of the present invention is a hydroponic apparatus configured to grow a plant having a taproot (a main root) and a branch root (a secondary root or a lateral root), characterized in that the hydroponic apparatus includes: a support configured to support the plant; a taproot irrigation part configured to supply a liquid to the taproot by spraying the liquid in a form of mist onto the taproot; a branch root irrigation part configured to supply a liquid to the branch root by soaking the branch root in the liquid; a detector configured to detect a concentration of the liquid provided to the branch root irrigation part; and a controller configured to, referring to the concentration detected by the detector, control at least one of a concentration of the liquid sprayed from the taproot irrigation part and the concentration of the liquid in which the branch root is soaked in the branch root irrigation part, and thereby to make the concentration of the liquid sprayed from the taproot irrigation part differ from the concentration of the liquid in which the branch root is soaked in the branch root irrigation part.

A hydroponic apparatus according to a second aspect of the present invention is the hydroponic apparatus according to the first aspect, characterized in that the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become lower than the concentration of the liquid in which the branch root is soaked in the branch root irrigation part.

A hydroponic apparatus according to a third aspect of the present invention is the hydroponic apparatus according to the first aspect, characterized in that the hydroponic apparatus further includes: a separator configured to physically at least partially separate the taproot irrigation part and the branch root irrigation part from each other, and thereby to form a collection layer configured to collect the liquid sprayed from the taproot irrigation part; and a collection/recycling part configured to collect the liquid which is sprayed from the taproot irrigation part and falls into the collection layer, and to recycle the collected liquid into the liquid to be sprayed from the taproot irrigation part.

A hydroponic apparatus according to a fourth aspect of the present invention is the hydroponic apparatus according to the third aspect, characterized in that the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become higher than the concentration of the liquid in which the branch root is soaked in the branch root irrigation part.

A hydroponic apparatus according to a fifth aspect of the present invention is the hydroponic apparatus according to the fourth aspect, characterized in that: the taproot irrigation part includes multiple spraying ports in the collection layer, heights of the spraying ports relative to the plant being different; and the taproot irrigation part sprays a higher-concentration liquid onto a higher portion of the plant.

A hydroponic method according to a sixth aspect of the present invention is a hydroponic method of growing a plant having a taproot and a branch root, characterized that the hydroponic method includes: supplying a liquid to the taproot by spraying the liquid in a form of mist onto the taproot, and supplying a liquid to the branch root by soaking the branch root in the liquid; detecting a concentration of the liquid supplied to the branch root; and by referring to the detected concentration, controlling at least one of a concentration of the liquid sprayed onto the taproot and the concentration of the liquid in which the branch root is soaked.

### [Brief Description of Drawings]

[Fig. 1] Fig. 1 is a perspective view showing a configuration example of a hydroponic apparatus of an embodiment of the present invention.
[Fig. 2] Fig. 2 is a perspective view showing another configuration example of the hydroponic apparatus of the embodiment of the present invention.

### [Description of Embodiments]

Referring to the drawings, descriptions will be hereinbelow provided for embodiments of the present invention.

### [Embodiment]

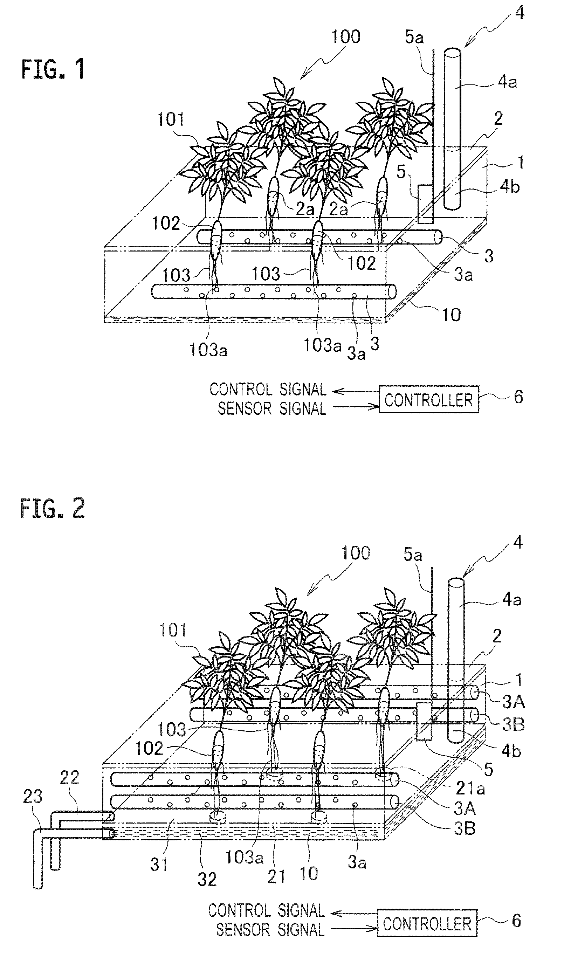

A hydroponic apparatus of the embodiment of the present invention is configured as shown in Fig. 1, for example.

This hydroponic apparatus hydroponically cultivates plants 100 by supplying liquids to taproots 102 and branch roots 103 (underground portions) of the plants 100 without using soil to grow the plants 100.

This hydroponic apparatus performs both mist culture and deep flow culture in particular. Kinds of the plants 100 to be grown by the hydroponic apparatus of the embodiment are arbitrary as long as the plants 100 have their taproots 102 and branch roots 103. In addition, the liquids explained as being supplied to the plants 100 in the embodiment include water, and a culture solution (liquid fertilizer) made from water and nutrients.

The hydroponic apparatus shown in Fig. 1 grows the plants 100 which have their stalks and leaves 101 growing upward, as well as their taproots 102 and branch roots 103. The hydroponic apparatus includes a plant cultivation pool 1, a plant support body 2, taproot irrigation parts 3, a liquid fertilizer adder 4, a liquid fertilizer concentration management sensor 5 and a controller 6.

The plant cultivation pool 1 is shaped like a box. The plant cultivation pool 1 reserves a deep-flow nutrient solution 10 in its bottom portion. The deep-flow nutrient solution 10 placed in the bottom portion of the plant cultivation pool 1 corresponds to a branch root irrigation part.

It should be noted that in this embodiment, a liquid fertilizer sprayed from mist spraying ports 3a, which will be described later, is also mixed into the deep-flow nutrient solution 10. The root tips of the taproots 102, the branch roots 103, and the root hair growing from the branch roots 103 are soaked in the deep-flow nutrient solution 10.

The deep-flow nutrient solution 10 is supplied to the inside of the plant cultivation pool 1 by operators, or using pipes and a pump albeit not illustrated. The plant cultivation pool 1 functions as the branch root irrigation part configured to supply the liquid (the deep-flow nutrient solution 10) to the branch roots 103 by allowing the branch roots 103 to be soaked in the liquid.

The plant support body 2 is placed in the upper end of the plant cultivation pool 1. The plant support body 2 may be formed from light-blocking sheets which blocks light emitted onto the plants 100 from above. Supports 2a for supporting the plants 100 with the plants 100 inserted through the supports 2a are provided to the plant support body 2.

Each support 2a supports the corresponding plant 100 by applying pressure to the plant 100 from the side of the plant 100. A ring-shaped sponge may be used as the support 2a. Thus, the plant support body 2 supports each plant 100 using frictional force between the corresponding sponge and the plant 100. Incidentally, what material is used as the support 2a does not matter as long as it can support the plant 100. For example, a string-like material may be used to suspend the shoot of the plant 100.

The taproot irrigation parts 3 spray a liquid fertilizer (mist) to the taproots 102 inside the plant cultivation pool 1. Thereby, the taproot irrigation parts 3 supply the liquid to the taproots 102. Each taproot irrigation part 3 includes mist spraying ports 3a which are formed from multiple through-holes provided to a cylindrical pipe.

The taproot irrigation parts 3 are connected to a liquid supply pipe, although not illustrated. The mist spraying ports 3a send the liquid, supplied from the liquid supply pipe, through the air in the form of a spray (mist). Incidentally, the mist spraying ports 3a are not limited to the mode shown in Fig. 1. Instead, nozzles may be provided to components inside the plant cultivation pool 1 at arbitrary heights.

The concentration of the liquid sprayed from the taproot irrigation parts 3 may be set at a predetermined concentration, or may be adjustable by the controller 6. The controller 6 can adjust how often the taproot irrigation parts 3 spray the mist, and how long the taproot irrigation parts 3 spay the mist each time.

The liquid fertilizer adder 4 adds the fertilizer to the deep-flow nutrient solution 10 inside the plant cultivation pool 1. An upper portion 4a of the liquid fertilizer adder 4 juts out from the plant support body 2, while a lower portion 4b of the liquid fertilizer adder 4 extends downward from the plant support body 2. The liquid fertilizer adder 4 is supplied with the fertilizer from the upper portion 4a, and supplies the fertilizer to the deep-flow nutrient solution 10 from the lower portion 4b.

Thereby, the liquid fertilizer adder 4 adjusts the concentration of the deep-flow nutrient solution 10. The liquid fertilizer adder 4 adds the fertilizer in accordance with a control signal sent from the controller 6, for example. Incidentally, if the amount of circulated deep-flow nutrient solution 10 and the volume of deep-flow nutrient solution 10 are already known, the liquid fertilizer adder 4 may add a predetermined amount of fertilizer at predetermined times.

The liquid fertilizer concentration management sensor 5 functions as a detector configured to detect the concentration of ingredients corresponding to the fertilizer included in the deep-flow nutrient solution 10. The concentration of the deep-flow nutrient solution 10 detected by the liquid fertilizer concentration management sensor 5 is read by the controller 6.

The controller 6 controls the parts of the plant cultivation apparatus while receiving sensor signals and outputting control signals. Referring to the concentration of the deep-flow nutrient solution 10 detected by the liquid fertilizer concentration management sensor 5, the controller 6 controls the water and fertilizer to be given to the plants 100.

Based on the concentration of the deep-flow nutrient solution 10, the controller 6 controls at least either the concentration of the liquid sprayed from the mist spraying ports 3a or the concentration of the deep-flow nutrient solution 10 in which the branch roots 103 are soaked. Thereby, the controller 6 makes the concentration of the liquid fertilizer sprayed from the taproot irrigation parts 3 differ from the concentration of the deep-flow nutrient solution 10 in which the branch roots 103 are soaked.

The controller 6 controls the concentration of the deep-flow nutrient solution 10 in which the branch roots 103 are soaked, so as to make the concentration of the deep-flow nutrient solution 10 in which the branch roots 103 are soaked become lower than the concentration of the liquid sprayed from the mist spraying ports 3a.

To put it concretely, the controller 6 causes a low-concentration liquid fertilizer (whose EC is 1.0 mS/cm or less) to be sprayed from the mist spraying ports 3a onto the taproots 102. Meanwhile, the controller 6 makes the root tips of the taproots 102 and the branch roots 103 soaked in the deep-flow nutrient solution 10 using a high-concentration liquid fertilizer (whose EC is 1.3 mS/cm or greater).

It should be noted that EC represents electric conductivity. By controlling the liquid fertilizer adder 4, the controller 6 of the embodiment makes the liquid fertilizer adder 4 add the fertilizer. Otherwise, the controller 6 may be configured to not only control the liquid fertilizer adder 4, but also control the concentration of the liquid fertilizer to be sprayed from the taproot irrigation parts 3.

As described above, this hydroponic apparatus (hydroponic method) is capable of performing the irrigation while making the concentration of the liquid fertilizer different between the taproots 102 and the branch roots 103 in order to enlarge and grow the taproots 102 of the plants 100 which have their the taproots 102 and the branch roots 103. For this reason, when growing the plants 100 using two or more liquid fertilizers for the mist culture and the deep-flow culture, this hydroponic apparatus can inhibit the interference between (among) the concentrations of the liquid fertilizers.

Thereby, the hydroponic apparatus is capable of controlling the enlargement of, and the direction of the enlargement of, the roots of the plants 100. The hydroponic apparatus is further capable of growing the roots of the plants 100 in the vertical direction. Particularly in the case of the plants 100 whose roots are of commercial value, the control of the enlargement of, and the direction of the enlargement of, the roots contributes to an increase in their value. Simultaneously, the use of the taproot irrigation parts 3 makes it possible to inhibit the roots from becoming dried or rotten during the root cultivation.

In addition, this hydroponic apparatus makes the concentration of the liquid fertilizer sprayed from the taproot irrigation parts 3 becomes lower than the concentration of the deep-flow nutrient solution 10 in which the branch roots 103 are soaked. Thereby, this hydroponic apparatus is capable of bringing about the forgoing effects, and growing the roots of the plants 100 in the vertical direction.

### [Another Embodiment]

Next, referring to Fig. 2, descriptions will be provided for a hydroponic apparatus of another embodiment of the present invention. Incidentally, components which are the same as those of the above-described embodiment will be denoted by the same reference signs, and detailed descriptions for such components are omitted.

The hydroponic apparatus of the embodiment includes a separator 21, a mist nutrient solution collection pipe 22 and a deep-flow nutrient solution collection pipe 23 in addition to the above-described hydroponic apparatus.

The separator 21 is provided over the deep-flow nutrient solution 10 inside the plant cultivation pool 1. The separator 21 is disposed in a way that the taproot irrigation parts 3 in the upper portion of the plant cultivation pool 1 and the branch root irrigation part in the lower portion of the plant cultivation pool 1 are physically at least partially separated from each other.

Thereby, the separator 21 forms a collection layer 31 configured to collect the liquid sprayed from the mist spraying ports 3a. A soaking layer 32 in which the deep-flow nutrient solution 10 exists is under the collection layer 31.

The separator 21 is provided with hole portions 21a which extend in the same direction as the plants 100 extend. Thereby, when grown, the root tips of the taproots 102 and the branch roots 103 can be soaked in the deep-flow nutrient solution 10.

Taproot irrigation parts 3A, 3B are formed from pipes which are provided extending in multiple areas along lateral surfaces of the plant cultivation pool 1. Each of the taproot irrigation parts 3A, 3B is provided with multiple spraying ports in the collection layer 31, and the heights of the spraying ports relative to the plants 100 are different.

Thereby, part of the liquid sprayed from the mist spraying ports 3a adheres to the taproots 102 and the branch roots 103 of the plants 100, while the other part of the liquid falls into the separator 21.

The mist nutrient solution collection pipe 22 is connected to the collection layer 31 formed from the separator 21 inside the plant cultivation pool 1. The mist nutrient solution collection pipe 22 collects the liquid which are sprayed from taproot irrigation parts 3, and which falls into the collection layer 31.

The thus-collected liquid is recycled into the liquid fertilizer to be sprayed or the deep-flow nutrient solution 10. Thereby, the mist nutrient solution collection pipe 22 functions as a collection/recycling part configured to recycle the collected liquid into the liquid to be sprayed from the mist spraying ports 3a and the deep-flow nutrient solution 10.

The deep-flow nutrient solution collection pipe 23 is connected to a section of the plant cultivation pool 1 which is under the collection layer 31 which reserves the deep-flow nutrient solution 10. The deep-flow nutrient solution collection pipe 23 collects the deep-flow nutrient solution 10. For example, using a pipe and a pump, although not illustrated, the mist nutrient solution collection pipe 22 collects the deep-flow nutrient solution 10 supplied to the plant cultivation pool 1.

In this hydroponic apparatus, the controller 6 performs control so as to make the concentration of the liquid sprayed from the mist spraying ports 3a become lower than the concentration of the deep-flow nutrient solution 10 in which the taproots 102 are soaked. To this end, the controller 6 controls the concentration of ingredients corresponding to the fertilizer included in the deep-flow nutrient solution 10. Thereby, the controller 6 controls the enlargement of, and the direction of the enlargement of, the roots of the plants 100.

To put it more concretely, the controller 6 causes a high-concentration liquid fertilizer (whose EC is 1.3 mS/cm or greater) to be sprayed from the taproot irrigation parts 3A, while an intermediate-concentration liquid fertilizer (whose is greater than 1.0 mS/cm, but less than 1.3 mS/cm) is sprayed from the taproot irrigation parts 3B. Thereby, the taproot irrigation parts 3A, 3B spray the high-concentration and intermediate-concentration liquid fertilizers onto the taproots 102 and the root hair extending from the taproots 102.

Furthermore, a low-concentration liquid fertilizer (whose EC is 1.0 mS/cm or less) is used as the deep-flow nutrient solution 10. Thereby, the root tips of the taproots 102 are supplied with the low-concentration deep-flow nutrient solution 10. To this end, the controller 6 adjusts the concentration of the deep-flow nutrient solution 10 by controlling the liquid fertilizer adder 4, as in the case of the foregoing embodiment. Incidentally, the hydroponic apparatus maybe instead configured to be capable of controlling at least either the concentration of the deep-flow nutrient solution 10 or the concentrations of the liquid fertilizers sprayed from the taproot irrigation parts 3.

As described above, in the plant cultivation pool 1, the separator 21 physically at least partially separates the taproot irrigation parts from the branch root irrigation part. Thereby, the separator 21 forms the collection layer 31 configured to collect the liquid fertilizers sprayed from the taproot irrigation parts 3. For this reason, it is possible to separately collect the liquid fertilizers sprayed from the mist spraying ports 3a, and to cultivate the plants 100 while recycling and circulating the liquid fertilizers whose concentrations are different from each other.

Furthermore, this hydroponic apparatus makes the concentration of the liquids sprayed from the mist spraying ports 3a become higher than the concentration of the deep-flow nutrient solution 10 in which the branch roots 103 are soaked. To this end, the hydroponic apparatus controls at least either the concentration of the liquids sprayed from the taproot irrigation parts 3 or the concentration of the liquid in which the branch roots are soaked in the branch root irrigation part. Thereby, the hydroponic apparatus is capable of growing the roots of the plants 100 in the horizontal direction.

Moreover, in this hydroponic apparatus, the collection layer 31 are provided with the multiple mist spraying ports 3a whose heights relative to the plants 100 are different. In addition, the hydroponic apparatus sprays the higher-concentration liquid fertilizer onto the higher portions of the plants 100. Thereby, the hydroponic apparatus is capable of growing the roots of the plants 100 more in the horizontal direction.

It should be noted that the foregoing embodiments are examples of the present invention. For this reason, the present invention is not limited to the foregoing embodiments. It is a matter of course that depending on the design and the like, various changes which may lead to other embodiments can be made to the present invention within a scope not departing from the technical idea concerning the present ideas.

All the contents of Japanese Patent Application No. 2013-092279 (filed on April 25, 2013) are incorporated herein by reference.

### [Industrial Applicability]

According to the present invention, it is possible to inhibit the interference between the liquid fertilizer(s) for the mist culture and the liquid fertilizer for the deep flow culture.

### [Reference Signs List]

1 plant cultivation pool (branch root irrigation part)
2 plant support body (support)
2a support
3 taproot irrigation part
3a mist spraying port
4 liquid fertilizer adder (controller)
5 liquid fertilizer concentration management sensor (detector)
6 controller
10 deep-flow nutrient solution (branch root irrigation part)
21 separator
22 mist nutrient solution collection pipe
23 deep-flow nutrient solution collection pipe
31 collection layer

## Claims

1. A hydroponic apparatus configured to grow a plant having a taproot and a branch root, comprising:
a support configured to support the plant;
a taproot irrigation part configured to supply a liquid to the taproot by spraying the liquid in a form of mist onto the taproot;
a branch root irrigation part configured to supply a liquid to the branch root by soaking the branch root in the liquid;
a detector configured to detect a concentration of the liquid provided to the branch root irrigation part; comprising
a controller configured to, by referring to the concentration detected by the detector, control at least one of a concentration of the liquid sprayed from the taproot irrigation part and the concentration of the liquid in which the branch root is soaked in the branch root irrigation part, and thereby to make the concentration of the liquid sprayed from the taproot irrigation part differ from the concentration of the liquid in which the branch root is soaked in the branch root irrigation part.

2. The hydroponic apparatus according to claim 1, wherein
the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become lower than the concentration of the liquid in which the branch root is soaked in the branch root irrigation part.

3. The hydroponic apparatus according to claim 1, further comprising:
a separator configured to physically at least partially separate the taproot irrigation part and the branch root irrigation part from each other, and thereby to form a collection layer configured to collect the liquid sprayed from the taproot irrigation part; and
a collection/recycling part configured to collect the liquid which is sprayed from the taproot irrigation part and falls into the collection layer, and to recycle the liquid into the liquid to be sprayed from the taproot irrigation part.

4. The hydroponic apparatus according to claim 3, wherein
the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become higher than the concentration of the liquid in which the branch root is soaked in the branch root irrigation part.

5. The hydroponic apparatus according to claim 4, wherein
the taproot irrigation part includes a plurality of spraying ports in the collection layer, heights of the spraying ports relative to the plant being different, and
the taproot irrigation part sprays a higher-concentration liquid onto a higher portion of the plant.

6. A hydroponic method of growing a plant having a taproot and a branch root, comprising:
supplying a liquid to the taproot by spraying the liquid in a form of mist onto the taproot, and supplying a liquid to the branch root by soaking the branch root in the liquid;
detecting a concentration of the liquid supplied to the branch root; and
by referring to the detected concentration, controlling at least one of a concentration of the liquid sprayed onto the taproot and the concentration of the liquid in which the branch root is soaked.

## Amended claims

### Amended claims under Art. 19.1 PCT

**1.** (Amended)
A hydroponic apparatus configured to grow a plant having a taproot and a branch root, comprising:
a support configured to support the plant;
a taproot irrigation part configured to supply a liquid to the taproot by spraying the liquid in a form of mist onto the taproot;
a branch root irrigation part configured to supply a liquid to the branch root by soaking the branch root in the liquid;
a detector configured to detect a concentration of the liquid provided to the branch root irrigation part; and
a controller configured to, by referring to the concentration detected by the detector, control at least one of a concentration of the liquid sprayed from the taproot irrigation part and the concentration of the liquid in which the branch root is soaked in the branch root irrigation part, and thereby to make the concentration of the liquid sprayed from the taproot irrigation part differ from the concentration of the liquid in which the branch root is soaked in the branch root irrigation part.

**2.** The hydroponic apparatus according to claim 1, wherein
the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become lower than the concentration of the liquid in which the branch root is soaked in the branch root irrigation part.

**3.** The hydroponic apparatus according to claim 1, further comprising:
a separator configured to physically at least partially separate the taproot irrigation part and the branch root irrigation part from each other, and thereby to form a collection layer configured to collect the liquid sprayed from the taproot irrigation part; and
a collection/recycling part configured to collect the liquid which is sprayed from the taproot irrigation part and falls into the collection layer, and to recycle the liquid into the liquid to be sprayed from the taproot irrigation part.

**4.** The hydroponic apparatus according to claim 3, wherein
the controller controls at least one of the concentration of the liquid sprayed from the taproot irrigation part and the concentration of the liquid in which the branch root is soaked in the branch root irrigation part in such a manner as to make the concentration of the liquid sprayed from the taproot irrigation part become higher than the concentration of the liquid in which the branch root is soaked in the branch root irrigation part.

**5.** The hydroponic apparatus according to claim 4, wherein
the taproot irrigation part includes a plurality of spraying ports in the collection layer, heights of the spraying ports relative to the plant being different, and
the taproot irrigation part sprays a higher-concentration liquid onto a higher portion of the plant.

**6.** Cancelled)
